(19) Europäisches Patentamt
European Patent Office
Office européen des brevets

(11) **EP 4 521 767 A1**

(12) **EUROPEAN PATENT APPLICATION**
published in accordance with Art. 153(4) EPC

(43) Date of publication:
**12.03.2025 Bulletin 2025/11**

(21) Application number: **23799647.5**

(22) Date of filing: **02.05.2023**

(51) International Patent Classification (IPC):
*H04N 23/959* (2023.01)    *H04N 23/67* (2023.01)
*H04N 5/77* (2006.01)    *G03B 13/20* (2021.01)
*G03B 13/36* (2021.01)

(52) Cooperative Patent Classification (CPC):
**G03B 13/20; G03B 13/36; H04N 5/77; H04N 23/67;
H04N 23/959**

(86) International application number:
**PCT/KR2023/005963**

(87) International publication number:
**WO 2023/214766 (09.11.2023 Gazette 2023/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.05.2022 KR 20220055392
28.04.2023 KR 20230056043**

(71) Applicant: **Hanwha Vision Co., Ltd.
Seongnam-si, Gyeonggi-do 13488 (KR)**

(72) Inventors:
• **PARK, Dong Jin**
  **Seongnam-si Gyeonggi-do 13488 (KR)**
• **KIM, Dae Bong**
  **Seongnam-si Gyeonggi-do 13488 (KR)**
• **KWON, Young Sang**
  **Seongnam-si Gyeonggi-do 13488 (KR)**
• **KIM, Hyuck Rae**
  **Seongnam-si Gyeonggi-do 13488 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR GENERATING DISTANCE INFORMATION**

(57)    A distance information generation apparatus includes a block divider dividing a first image captured by an imaging device into a plurality of blocks, a movement value calculator calculating direction movement values for capturing at least one or more blocks among the plurality of divided blocks as targets, and a distance information retriever acquiring distance information for the at least one or more blocks by analyzing a second image captured by the imaging device, whose imaging direction has been changed based on the calculated direction movement values.

FIG. 1

EP 4 521 767 A1

**Description**

[TECHNICAL FIELD]

The present invention relates to a distance information generation apparatus and method, and more particularly, to a technology for automatically acquiring distance information at an arbitrary position within an image currently being captured.

[BACKGROUND ART]

Generally, a camera device provides a feature that allows the user to manually set the focus value for a specific scene. This feature is referred to as focus save, focus recall, focus preset, etc.

According to this feature, when the user moves the camera device in the pan, tilt, or zoom direction and determines that they are viewing the same scene as a previously stored scene, the lens is adjusted to the corresponding stored focus value. This function is particularly necessary for critical areas where the focus must not shift, such as the entrance to a parking lot. This is because auto-focus (AF) performs poorly in low-light environments or spot-light conditions. As a result, the license plate of a car may not be properly recognized, or the AF performance may degrade due to car headlights.

However, these conventional techniques only provide a feature that allows the user to manually set and store the focus position, and do not offer a function that automatically sets the focus position (distance information) for an arbitrary location included in a specific image.

Therefore, it is necessary to suggest a solution that goes beyond the limitation of manually storing the focus position, by enabling the automatic acquisition of distance information for an arbitrary position within an image currently being captured.

[DISCLOSURE]

[Technical Problems]

The technical problem to be solved by the present invention is to provide an apparatus and method for generating and storing distance information for each divided block within an image being captured and utilizing that distance information.

However, aspects of the present invention are not restricted to those set forth herein. The above and other aspects will become more apparent to one of ordinary skill in the art to which the disclosure pertains by referencing the detailed description of the present invention given below.

[Technical Solutions]

According to an aspect of an exemplary embodiment, there is provided a distance information generation apparatus having a processor and a memory that stores program instructions executed by the processor, the distance information generation apparatus including: a block divider dividing a first image captured by an imaging device into a plurality of blocks; a movement value calculator calculating direction movement values for capturing at least one or more blocks among the plurality of divided blocks as targets; and a distance information retriever acquiring distance information for the at least one or more blocks by analyzing a second image captured by the imaging device, whose imaging direction has been changed based on the calculated direction movement values.

The distance information for the at least one or more blocks is a representative distance value for the at least one or more blocks based on the direction movement values of the at least one or more blocks among the plurality of divided blocks.

The plurality of blocks are M×M blocks obtained by dividing the first image in horizontal and vertical directions, where M is a natural number.

The direction movement values are PTZ values for the at least one or more blocks, and the second image is a zoomed-in image having the same size as the first image.

The distance information generation apparatus further includes a controller providing distance information for a block corresponding to a region of interest to a user via a user interface when the user designates a specific position in the first image as the region of interest.

The distance information generation apparatus further includes: a user interface enabling the user to designate a specific position in the first image as a region of interest; and a controller acquiring distance information for the region of interest based on distance information for a block corresponding to the region of interest, and causing the imaging device to capture an image based on a focus distance calculated from the acquired distance information.

When the region of interest spans two or more blocks, the distance information for the region of interest is obtained by summing distance information for each of the two or more blocks multiplied by an area ratio of an overlapping portion between the region of interest and each of the two or more blocks.

When continuous auto-focusing is required for the region of interest, the distance information for the region of interest at a specific moment is obtained by summing the distance information for each of the two or more blocks multiplied by an area ratio of an overlapping portion between the region of interest and each of the two or more blocks when the region of interest is moving to span two or more blocks at the specific moment.

The distance information generation apparatus further includes a block scanner determining a scan order of the plurality of divided blocks.

The distance information generation apparatus further includes a range calculator calculating a range of a number of divisions for the plurality of blocks.

A lower limit of the range of the number of divisions is a value that enables the imaging device to secure a minimum distance resolution.

An upper limit of the range of the number of divisions is a value that ensures the processing time required for the distance information retriever to acquire the distance information for all the blocks is below a threshold.

The distance information generation apparatus further includes a user interface receiving a trigger command from the user to divide the first image into the plurality of blocks.

If there is no value that satisfies both the lower and upper limits of the range of the number of divisions, the imaging device captures a zoomed-in image from the first image, and the block divider divides the captured zoomed-in image into the plurality of blocks.

According to an aspect of another exemplary embodiment, there is provided a distance information generation apparatus having a processor and a memory that stores program instructions executed by the processor, the distance information generation apparatus including: a block divider dividing a first image captured by an imaging device into a plurality of blocks; a movement value calculator calculating direction movement values for capturing at least one or more blocks among the plurality of divided blocks as targets; and a distance information retriever mounted on the imaging device and acquiring absolute distance information for the at least one or more blocks, wherein an imaging direction of the imaging device is changed based on the calculated direction movement values.

The distance information retriever is a Lidar distance meter or a laser distance meter.

According to an aspect of another exemplary embodiment, there is provided a distance information generation method performed by an apparatus having a processor and a memory that stores program instructions executed by the processor, the distance information generation method including: dividing a first image captured by an imaging device into a plurality of blocks; calculating direction movement values for capturing at least one or more blocks among the plurality of divided blocks as targets; and acquiring distance information for the at least one or more blocks by analyzing a second image captured by the imaging device, whose imaging direction has been changed based on the calculated direction movement values.

The plurality of blocks are M×M blocks obtained by dividing the first image in horizontal and vertical directions, where M is a natural number.

The direction movement values are PTZ values for the at least one or more blocks, and the second image is a zoomed-in image having the same size as the first image.

The distance information generation method further includes calculating a range of a number of divisions for the plurality of blocks; wherein a lower limit of the range of the number of divisions is a value that enables the imaging device to secure a minimum distance resolution, and an upper limit of the range of the number of divisions is a value that ensures the processing time required for the distance information retriever to acquire the distance information for all the blocks is below a threshold.

[Advantageous Effects]

According to the present invention, after generating distance information for each divided block within an image being captured by a video surveillance system, the generated distance information can be provided to the user when the corresponding block becomes a point of interest, or rapid auto-focusing or event detection can be performed using the generated distance information.

[BRIEF DESCRIPTION OF DRAWINGS]

FIG. 1 is a block diagram illustrating the configuration of a distance information generation apparatus according to one embodiment of the present invention.

FIG. 2 is a diagram illustrating the result of dividing a first image into a plurality of (M×M) blocks.

FIG. 3 is a diagram illustrating the result of zooming in on a specific block within the first image to obtain a second image.

FIG. 4 is a diagram illustrating the pan/tilt offset between the center of the first image and the center of a divided block.

FIG. 5 is a diagram illustrating the process of finding an optimal focus position.

FIG. 6 is a graph showing locus data that shows changes in focus position at a specific zoom ratio.

FIG. 7 is a diagram illustrating the geometric relationship between a start view angle and a target view angle.

FIG. 8 is a diagram illustrating the relationship between a trigger image, a start image, and a target image.

FIG. 9 is a diagram illustrating the hardware configuration of a computing device that implements the distance information generation apparatus of FIG. 1.

FIG. 10 is a flowchart schematically illustrating a distance information generation method according to one embodiment of the present invention.

[BEST MODES FOR CARRYING OUT THE INVENTION]

Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. The exemplary embodiments are provided for making the disclosure of the inventive concept thorough and for fully conveying the scope of the inventive concept to those skilled in the art. It is to be noted that the scope of the disclosure is defined only by the claims. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Terms used herein are for illustrating the embodiments rather than limiting the present disclosure. As used herein, the singular forms are intended to include plural forms as well, unless the context clearly indicates otherwise. Throughout this specification, the word "comprise" and variations such as "comprises" or "comprising," will be understood to imply the inclusion of stated elements but not the exclusion of any other elements.

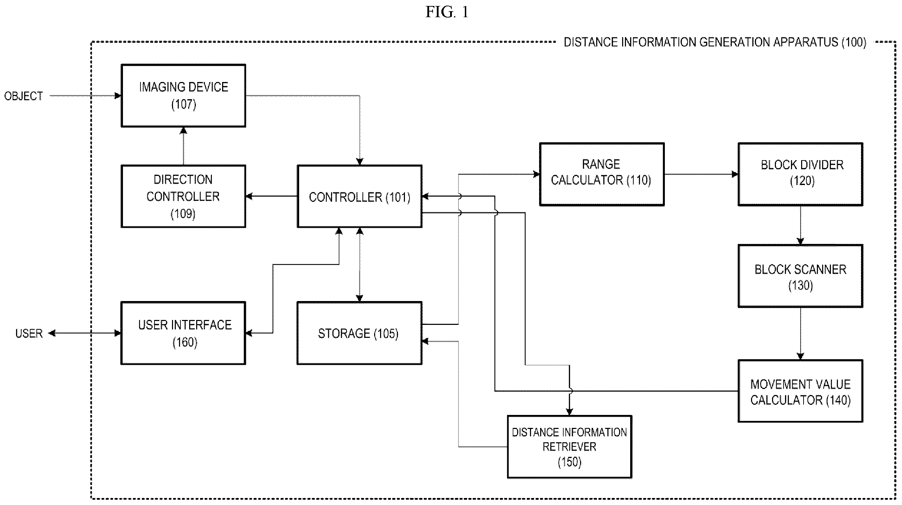

Hereinafter, exemplary embodiments of the present disclosure will be described in detail with reference to the accompanying drawings. FIG. 1 is a block diagram illustrating the configuration of a distance information generation apparatus 100 according to an embodiment of the present invention. The distance information generation apparatus 100 may include a controller 101, a storage 105, an imaging device 107, a direction controller 109, a range calculator 110, a block divider 120, a block scanner 130, a movement value calculator 140, a distance information retriever 150, and a user interface 160. However, in another embodiment of the present invention, the distance information generation apparatus 100 may not include the imaging device 107 and the direction controller 109, which are components of a so-called camera device, and may instead be configured to communicate with the camera device. In this case, the distance information generation apparatus 100 may further include a communication interface for communicating with the camera device.

The controller (or processor) 101 functions as a controller that controls the operations of other components of the distance information generation apparatus 100, and is generally implemented as a central processing unit (CPU), a microprocessor, or the like. In addition, the storage 105 stores the results of processes performed by the controller 101 or stores data necessary for the operation of the controller 101, such as program instructions executed by the controller 101. The storage 105 may be implemented as either volatile memory or non-volatile memory.

The imaging device 107 can be opened or closed by a shutter and includes an optical system (such as lens) that allows light reflected from a subject to enter when the shutter is open, and an image sensor that captures the light and outputs it as electrical signals. The captured image may be displayed as either an analog signal or a digital signal, but commonly as a digital signal in recent times. This digital signal may be pre-processed by an image signal processor (ISP) or image processing unit before being provided to the controller 101 and may be temporarily or permanently stored in the storage 105.

At this time, the imaging device 107 may have its imaging direction changed by the direction controller 109 according to the movement values calculated by the controller 101. In the present invention, the term "imaging direction" refers to at least one of the parameters, i.e., pan, tilt, and zoom that indicate displacement in three-dimensional (3D) space. Specifically, the direction controller 109 may change the zoom position by moving the lens of the imaging device 107 forward or backward within a predetermined range, and may change the orientation of the imaging device 107 by rotating the imaging device 107 in the pan direction and/or tilt direction.

The user interface 160 has the function of interacting with a user, that is, receiving specific commands from the user or displaying relevant information to the user. For this purpose, the user interface 160 may include both input and output means. The input means may be implemented as a mouse, keyboard, voice recognition device, motion recognition device, etc., and the output means may be implemented as a display device such as an LED or LCD, a speaker, a haptic device, etc. Alternatively, the user interface 160 may be a device that simultaneously includes both input and output means, such as a touch screen.

Through the user interface 160, the user may designate a specific location within an image currently being captured as a region of interest and may input a trigger command for dividing the image being captured into a plurality of blocks. The user may also receive the distance information for the block corresponding to the designated region of interest through the user interface 160.

Meanwhile, the block divider 120 divides a first image 10, which is currently being captured by the imaging device 107, into a plurality of blocks. This division may be performed automatically within the range (upper and lower limits) of the number of divisions that will be described later, or may be performed according to a command from the user via the user interface 160.

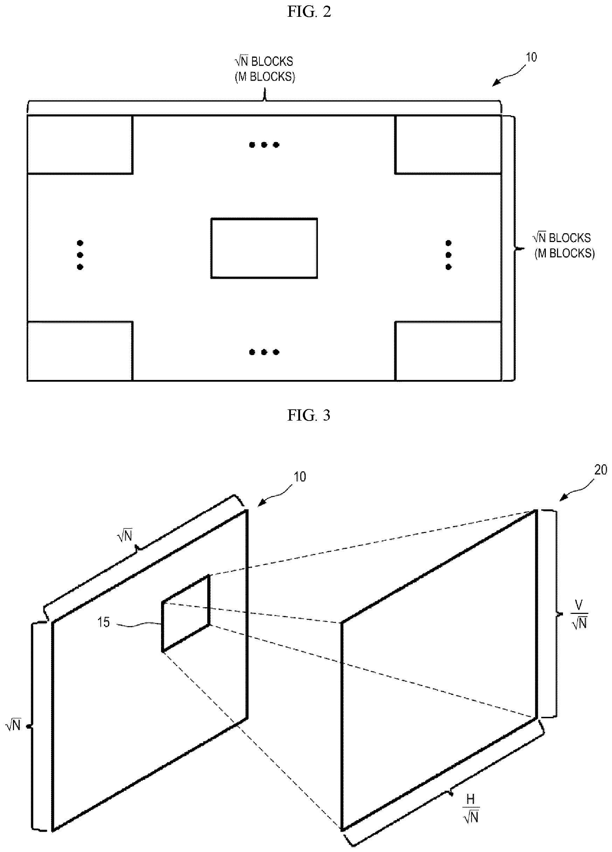

Here, the plurality of blocks may be M×M blocks obtained by dividing the first image 10 in the horizontal and vertical directions, as illustrated in FIG. 2 (where M is a natural number). In this case, when a second image 20 is divided into N blocks, the following equation is satisfied: $N = M^2$.

Dividing the first image 10 into the same numbers of blocks in both the horizontal and vertical directions is intended to ensure that the size of each divided image matches the size of the first image 10 when enlarged. However, the present invention is not strictly limited to this configuration, and the numbers of divisions in the horizontal and vertical directions may be set to differ. In the following, the numbers of divisions in the horizontal and vertical directions will be explained as being the same.

The movement values may be defined as the pan/tilt/zoom (PTZ) values for each block, and a second image 20 may be a zoomed-in image of the same size as the first image 10. At this time, the zoom-in offset from the first image 10 to the second image 20 is √N. That is, if the first image 10 is enlarged by √N times, the second image 20 can be obtained.

Referring to FIG. 3, the first image 10 is divided into √N (M) blocks in both the horizontal and vertical directions, resulting in a total of N blocks 15, and each block 15 is zoomed in to obtain a second image 20 of the same size as the first image 10. At this time, when the vertical and horizontal sizes of the first image 10 are denoted as V and H, respectively, the vertical size of the second image 20 becomes V/√N, and the horizontal size of the second image 20 becomes H/√N.

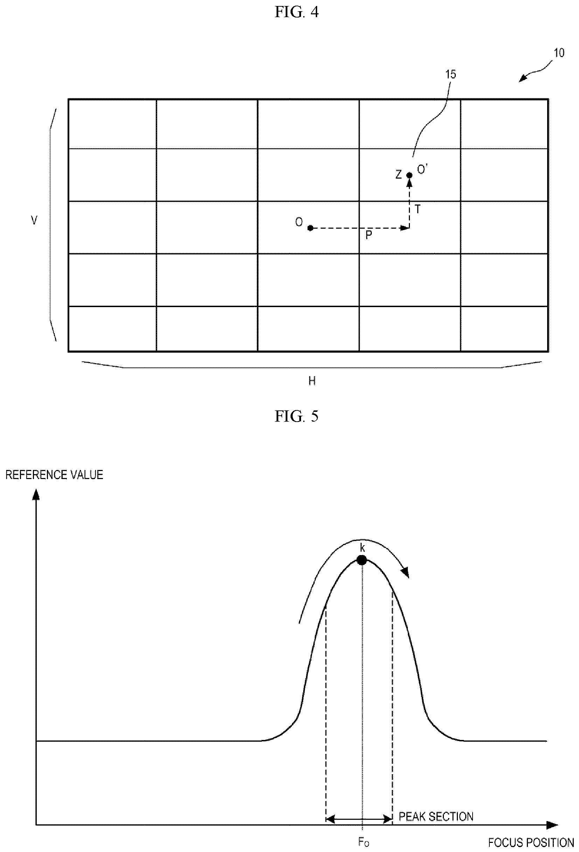

However, unless the block 15 is at the center of the first image 10, simply zooming in is not enough to obtain the second image 20 corresponding to the block 15. In addition to zooming in, pan/tilt control may also be required. For example, referring to FIG. 4, since the block 15 is not at a center O of the first image 10, it needs to be moved by a pan offset P and a tilt offset T from the center O of the image to ensure that the imaging device 107 is oriented toward a center O' of the block 15. These offsets P and T may be calculated by dividing a vertical size V and a horizontal size H of the first image 10 by √N, respectively. Depending on the position of the block 15, the divided value may need to be multiplied by an integer.

In this manner, the movement value calculator 140 calculates the direction movement values for targeting each block 15 among the divided blocks. The direction movement values may be configured to include the zoom-in offset, pan offset, and tilt offset.

Additionally, before the movement value calculator 140 calculates the direction movement values for each block 15, the block scanner 130 may determine in advance the scan order of the divided blocks 15. Preferably, this scan order may be performed in a direction that minimizes the distance between blocks to reduce scan time. However, the scan order is not limited to any specific method, such as sequential scanning or zigzag scanning.

Furthermore, the method for obtaining the second image 20 for each block 15 through the scan order may be one of the following two methods:

i) After obtaining the distance information for the block at a starting position through zooming in, returning to the starting position, moving to the second block, and zooming in to obtain the distance information; and
ii) Pre-calculating the coordinate values (pan/tilt offsets) for all the blocks from the starting position, zooming in, and moving according to the calculated coordinate values to obtain the distance information for each block at once.

The distance information retriever 150 analyzes the second image 150 captured by the imaging device 107, whose imaging direction has been changed according to the calculated direction movement values, to acquire the distance information for each block 15. The distance information for each block 15 may be a representative distance value for each block 15 belonging to the divided blocks, based on the direction movement values for each block. The representative distance value is a distance value that can represent the block 15, as the block 15 is composed of multiple pixels and thus needs to be defined as a single value. For example, the representative distance value may be obtained by finding the optimal focus position for the second image 20 corresponding to the block 15.

Referring to FIG. 5, the controller 101 moves the lens of the imaging device 107 within a predetermined range by the direction controller 109, searching for the optimal focus position where the reference value is maximized within that range. For this end, the controller 101 continuously checks changes in the reference value while the focus position of the lens is being adjusted. Initially, while moving in relatively large steps, the controller 101 first finds a peak section Fo that includes the point (peak point) where a peak value occurs. Once the peak section Fo is found, the controller 101 may perform fine adjustments within that peak section to discover a final peak point k, and the focus position at this peak point k is set as the optimal focus position. Typically, contrast data or edge data is used as the reference value. This contrast data may be defined as the sum of the absolute differences (SAD) between the pixel values in the region of interest and the surrounding pixels, and the larger this value, the more edge data or detail the image contains. In general, edge data has a higher value when the focus is accurate.

Once the distance information retriever 150 calculates the focus position for each block 15 in this manner, the distance information for the block 15 corresponding to the focus position at the specific zoom level may be obtained using locus data. The locus data is based on the optical characteristics of the imaging device 107 and is provided as specification information for the imaging device 107.

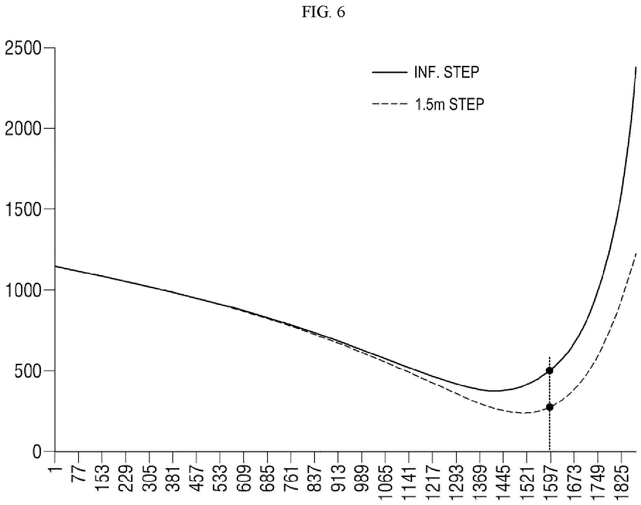

Referring to FIG. 6, only locus data at infinity (Inf) (solid line) and at 1.5 meters (dotted line) are illustrated. For example, at a zoom-in level of 1597, the focus position at 1.5 meters is approximately 300, and the focus position at infinity at the same zoom-in level is approximately 500. Therefore, if the focus position at a zoom-in level of 1597 is calculated as 300, it means that the distance between the imaging device 107 and the subject within the block 15 is 1.5 meters. Additionally, if the focus position at a zoom-in level of 1597 is calculated as 500, it means that the block 15 is at infinity and can be treated as a background.

Through this, once the distance information for each block 15 is acquired, this distance information may be used in various manners. For example, the distance information may be used for fast auto-focusing or for detecting events related to objects within the image. In the latter case, if an event is triggered when a specific object approaches within a certain distance, the acquired distance information for the block 15 may be used to determine whether the specific object is within the proximity. Additionally, when the user designates a specific location within the first image 10 as a region of interest, the distance information for the block corresponding to the region of interest may be provided to the user through the user interface 160.

Furthermore, the method of utilizing the distance information for fast auto-focusing may involve enabling the controller 101 to obtain the distance information for the block corresponding to the region of interest and capture an image using the imaging device 107 based on the focus distance calculated from the distance information. Specifically, the controller 101 may determine the initial focus position for auto-focus searching based on the distance information of the block 15 corresponding to the position of interest designated by the user, and auto-focusing may be performed near this initial focus position. In other words, since the optimal focus position only needs to be searched within a reduced margin, the time required for auto-focusing is reduced.

However, as described above, if the position of interest designated by the user coincides with or is included in a specific block 15, auto-focusing may be performed using the stored distance information for the specific block 15. However, if the position of interest spans two or more blocks 15, issues arise regarding which block's distance information should serve as the basis for auto-focusing.

In this case, the sum of the area ratio of the overlapping portion between the region of interest and the two or more blocks 15, multiplied by the distance information for the two or more blocks 15, i.e., the weighted sum of distance information based on the overlapping area, may be calculated or interpolated as the distance information for the region of interest.

The method of calculating the distance information for the region of interest using this weighted sum may also be applied in a case where the region of interest moves due to the movement of an object. For example, even if the original region of interest coincides with or is included in a specific block 15, it inevitably spans two or more blocks 15 as it moves. In this case, if auto-focusing is to be performed continuously or at certain intervals, the distance information for the region of interest at a specific moment may be calculated or interpolated using the weighted sum of the distance information based on the overlapping area, as described above.

Meanwhile, the range calculator 110 calculates the range of the number of divisions for the divided blocks. The reason for calculating the range of the number of divisions is that if the number of block divisions is too small, the minimum distance resolution cannot be secured, and when converting the focus distance to the actual distance between the object and the imaging device, the margin of error becomes too large, making practical distance conversion impossible. Therefore, the lower limit of the number of divisions needs to be a value that allows the imaging device 107 to secure the minimum distance resolution.

Since it is important to appropriately calculate the number of block divisions from an appropriate first image 10, a specific method needs to be proposed for determining this criterion. A method for calculating the number of block divisions will hereinafter be explained.

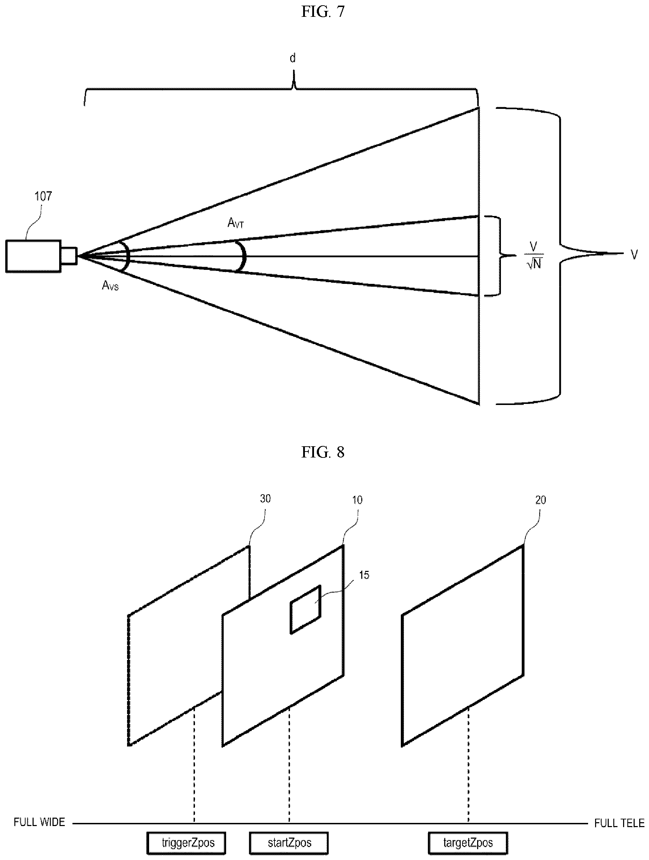

Referring to FIG. 7, the view angle of the first image 10 is defined as a start view angle, with the vertical view angle represented as $A_{VS}$ and the horizontal view angle represented as $A_{HS}$. In addition, the view angle of the second image 20 generated by zooming in on a specific block 15 is defined as a target view angle, with the vertical view angle represented as

$A_{VT}$ and the horizontal view angle represented as $A_{HT}$. Furthermore, V represents the vertical height of the first image 10, and $\sqrt{N}$ represents the number of vertical divisions.

Here, according to the geometric proportional relationship, the vertical target view angle $A_{VT}$ may be calculated according to Equation 1 below. According to Equation 1, when the first image 10 is divided into N blocks, the zoom position (zoom ratio) of the second image 20, which is the target image, may be obtained.

[Equation 1]

$$V = 2d \tan\left(\frac{A_{VS}}{2}\right)$$

$$\left(\frac{V}{\sqrt{N}}\right) = \left[\frac{2d \tan\left(\frac{A_{VS}}{2}\right)}{\sqrt{N}}\right] = 2d \tan\left(\frac{A_{VT}}{2}\right)$$

$$\therefore A_{VT} = 2 \tan^{-1}\left[\frac{\tan\left(\frac{A_{VS}}{2}\right)}{\sqrt{N}}\right]$$

Similarly, the horizontal target view angle $A_{HT}$ may be calculated according to Equation 2 below.

[Equation 2]

$$\therefore A_{HT} = 2 \tan^{-1}\left[\frac{\tan\left(\frac{A_{HS}}{2}\right)}{\sqrt{N}}\right]$$

In addition, combining Equations 1 and 2 yields Equation 3. According to Equation 3, when the view angles of the first and second images 10 and 20 are given, a number N of block divisions can be calculated.

[Equation 3]

$$A_{VT} = 2 \tan^{-1}\left[\frac{\tan\left(\frac{A_{VS}}{2}\right)}{\sqrt{N}}\right]$$

$$N \cong \left[\frac{\tan\left(\frac{A_{VS}}{2}\right)}{\tan\left(\frac{A_{VT}}{2}\right)}\right]^2$$

$$\therefore \sqrt{N} \cong \frac{\tan\left(\frac{A_{VS}}{2}\right)}{\tan\left(\frac{A_{VT}}{2}\right)}, \sqrt{N} \text{ is a positive integer}$$

Additionally, when the view angle of the second image 20 and the number N of block are given, the vertical view angle of the first image 10 may be obtained from Equation 4 below. Similarly, the horizontal view angle of the first image 10 may also be calculated.

[Equation 4]

$$A_{VS} = 2 \tan^{-1}\left[\sqrt{N} \tan\left(\frac{A_{VT}}{2}\right)\right]$$

However, there is a need to establish a criterion for the zoom-in ratio that ensures the minimum distance resolution in the target image, i.e., the second image 20. This criterion concerns how much zooming is required to secure the second image 20, but since the distance resolution varies depending on the locus data of the lens mounted on the imaging device 107, the criterion needs to be based on the distance resolution rather than simply the zoom ratio. A distance resolution Dr is defined as the difference in object distance $\triangle d$ relative to the difference in focus position $\triangle F$ between two points. Therefore, the distance resolution Dr may be calculated according to Equation 5 below. The minimum value of this distance resolution, referred to as the minimum distance resolution, may be empirically obtained through tests in various real-world cases.

[Equation 5]

$$D_r = 100 \times \frac{\Delta d}{\Delta F}$$

For example, in the present invention, when the surveillance area using a certain imaging device 107 is at a distance of 3 to 5 meters, and the minimum distance resolution is 1.5, the minimum zoom ratio of the imaging device 107 can be derived from the locus data. If the zoom ratio is 12x, and the zoom ratio of the first image 10 is 2x, the zoom-in ratio for obtaining the second image 20 can be calculated as 6 (= 12/2). Even when using an imaging device other than the imaging device 107, the same standard of minimum distance resolution applies, but the zoom ratio may differ. This is because the locus data differs between the imaging device 107 and other imaging devices. Therefore, the criterion for determining the lower limit of the number N of block divisions should be based on the minimum distance resolution rather than the zoom ratio.

In addition to distance resolution, the focus depth according to the zoom ratio may also be considered. As mentioned earlier, the distance resolution Dr at a zoom ratio of 12x for a distance of 3 to 5 meters is 1.5. At this time, if a focus depth Fd at a zoom ratio of 12x, according to the locus data, is 3.85, the zoom ratio of the second image 20 can be determined based on a reference value Rv calculated according to Equation 6 below, where both distance resolution and focus depth are considered.

[Equation 6]

$$R_v = 2 \times D_r \times F_d$$

For example, if the reference value Rv at a zoom ratio of 12x for a distance of 3 to 5 meters using the imaging device 107 is 11.55, the zoom ratio may be determined in another imaging device that makes the reference value Rv become 11.55 at the same distance of 3 to 5 meters. Here, the reason for multiplying the distance resolution Dr by 2 is that there are both far and near sides in the focus distance. Ultimately, the zoom-in ratio of the second image 20 may be determined by dividing the determined zoom ratio by the zoom ratio of the first image 10.

Equations 7 through 9 below illustrate the specific calculation process according to various embodiments of the present invention.

(1) When the zoom ratio of the first image 10 is 1x, the zoom ratio of the second image 20, which can cover 25 blocks, may be calculated according to the following Equation 7. Here, the vertical view angle of the imaging device 107 at 1x zoom is 16.7657.

[Equation 7]

$$\sqrt{N} = 5, \ A_{VS} = 16.7657$$

$$A_{VT} = 2\tan^{-1}\left[\frac{\tan\left(\frac{A_{VS}}{2}\right)}{\sqrt{N}}\right]$$

$$\therefore A_{VT} = 3.376°$$

Based on the locus data, the zoom ratio of the imaging device 107 corresponding to a vertical view angle of 3.376 is 5.34x. Therefore, since this is smaller than the 12x zoom ratio that provides the minimum distance resolution for the imaging device 107, the number N of block divisions needs to be increased. This means that if the number N of divisions is fixed at 25, the zoom ratio of the first image 10 needs to be greater than 1x.

(2) The number of blocks required to cover a target zoom ratio of 12x from a starting zoom ratio of 1x may be calculated according to the following Equation 8. Here, the vertical view angle of the imaging device 107 at 1x zoom is 16.7657, and the vertical view angle at 12x zoom is 1.5405.

[Equation 8]

$$\sqrt{N} \cong \frac{\tan\left(\frac{A_{VS}}{2}\right)}{\tan\left(\frac{A_{VT}}{2}\right)} \; , \sqrt{N} \; is \; a \; positive \; integer$$

$$\sqrt{N} = 10.9609 \cong 11$$

Thus, at least 121 divisions are required to secure the minimum distance resolution.

(3) The starting zoom ratio for covering a target zoom ratio of 12x using 25 blocks may be calculated according to the following Equation 9.

[Equation 9]

$$A_{VS} = 2 \tan^{-1}\left[\sqrt{N} \tan\left(\frac{A_{VT}}{2}\right)\right]$$

$$\therefore A_{VS} = 7.691°$$

Based on the locus data, the zoom ratio of the imaging device 107 corresponding to a vertical view angle of 7.691 is 2.26x. Therefore, if the first image 10 captured at a zoom ratio of 2.26x is divided into 25 blocks, the minimum distance resolution can be secured in the second image 20.

Meanwhile, the user interface 160 may receive a trigger command from the user to divide the image into a plurality of blocks. Through this, the user may store spatial information for the entire area (all blocks) with a simple operation such as clicking a button at the desired view angle. However, the lower and upper limits of the range of the number N of divisions both need to be set. The upper limit of the range of the number N of divisions should be set to ensure that the processing time required for the distance information retriever 150 to acquire the distance information for each block remains below a threshold value. The reason for setting the upper limit of the range of the number N of divisions is that although a sufficient number of divisions ensures the minimum distance resolution, increasing the number of divisions proportionally increases the processing time, including the computational time and PTZ control time. Even if the most accurate results can be obtained, excessive processing time increases the load on the distance information generation apparatus 100 and decreases user convenience.

However, since this upper limit depends on hardware specifications such as the CPU, it can be determined by considering the computation time of the distance information retriever 150 and the controller 101. For example, according to Equation 8, when the current zoom ratio of the first image 10 is 1x, the number N of block divisions required to cover a 12x zoom ratio in the second image 20 to secure the minimum distance resolution is 121. Therefore, if the user inputs a trigger command for the first image 10, the first image 10 needs to be divided into 121 blocks, but this number may exceed the computation time threshold. Conversely, if the first image 10 is divided into 25 blocks based on the computation time threshold, the zoom ratio of the second image 20 may become lower than 12x, making it impossible to secure the minimum distance resolution. Therefore, both the lower and upper limits of the number of block divisions are necessary to secure the minimum distance resolution while keeping the computation time (or processing time) below the threshold.

However, in some situations, it may not be possible to meet both the lower and upper limits of the number of block divisions. For example, the number of block divisions needs to be greater than N from the perspective of the minimum distance resolution, but from the perspective of computation time, the number of block divisions must be less than N. This problem can be solved by using a zoomed-in image as the starting image instead of the original zoom ratio when the trigger command is input, and dividing the zoomed-in starting image.

According to Equation 9, if the imaging device 107 captures an image at a zoom ratio of 2.26x, and that image is divided into 25 blocks, the target image 20 may have a zoom ratio of 12x, ensuring that the minimum distance resolution is satisfied.

For a better understanding, referring to FIG. 8, all images exist between the minimum zoom ratio (full wide) and the maximum zoom ratio (full tele). Here, the zoom ratio of a trigger image 30, when the user inputs a trigger command, is referred to as triggerZpos, the zoom ratio of the starting image, i.e., the first image 10, zoomed in from the trigger image 30 is referred to as startZpos, and the zoom ratio of the target image, i.e., the second image 20, is referred to as targetZpos.

When the number of divisions of the trigger image 30 is calculated based on the condition that targetZpos satisfies the minimum distance resolution, it may exceed the threshold of processing time. In this case, the first image 10, derived from the trigger image 30, is obtained. Here, the degree of zoom-in (startZpos/triggerZpos) may be determined based on the condition that the first image 10, when divided into the number N of divisions that does not exceed the threshold of processing time, satisfies the minimum distance resolution for the second image 20.

By using the zoomed-in first image 10 as the starting image and dividing it into N blocks, blocks 15 may be obtained, and by zooming in each block 15 to become the size of the first image 10, the second image 20 may be obtained.

In the above embodiment, the distance information retriever 150 estimates the focus position for the second image 20 corresponding to each block 15 and converts the estimated focus position into distance information using locus data.

However, in addition to this method, in which the distance information retriever 150 acquires distance information for each divided block 15 using image processing, it is also possible to measure absolute distance using a distance meter. For example, by attaching a distance meter in parallel with the imaging direction of the imaging device 107 and performing only pan/tilt control to direct the imaging device 107 toward each divided block 15, the absolute distance can be directly measured by the distance meter without the need for zooming in or focus estimation. The distance meter may use methods such as Lidar or laser to measure the time of flight (TOF) of reflected light.

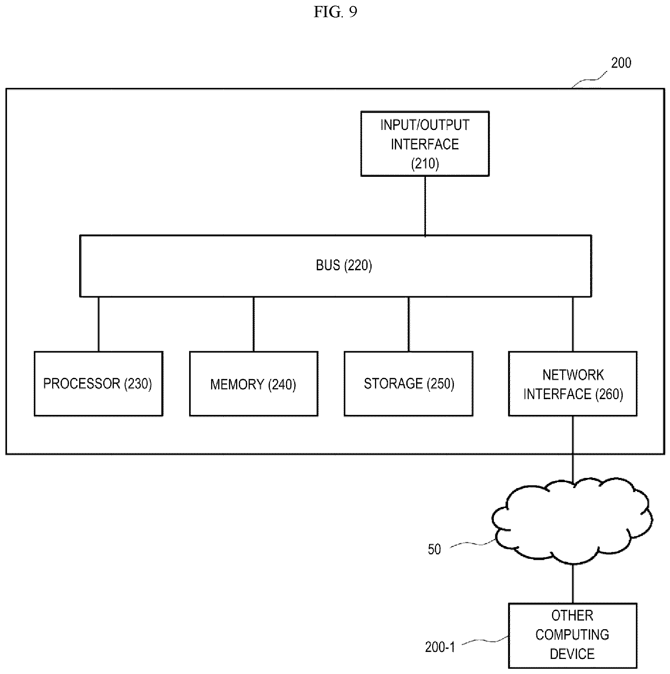

FIG. 9 is a diagram illustrating the hardware configuration of a computing device 200 that implements the distance information generation apparatus 100 of FIG. 1.

The computing device 200 includes a bus 220, a processor 230, a memory 240, a storage 250, an input/output interface 210, and a network interface 260. The bus 220 is a data transmission path that enables the processor 230, memory 240, storage 250, input/output interface 210, and network interface 260 to transmit and receive data. However, the method of connecting the processor 230 and other components is not limited to bus connections. The processor 230 is a computation processing unit such as a CPU or Graphics Processing Unit (GPU). The memory 240 is a memory such as a random-access memory (RAM) or read-only memory (ROM). The storage 250 is a storage device such as a hard disk, solid state drive (SSD), or memory card. The storage 250 may also be a memory such as a RAM or ROM.

The input/output interface 210 is an interface for connecting the computing device 200 to an input/output device. For example, a keyboard or mouse may be connected to the input/output interface 210.

The network interface 260 is an interface that enables the computing device 200 to communicate with external devices and transmit and receive packets. The network interface 260 may be either a wired or wireless network interface. For example, the computing device 200 may be connected to another computing device 200-1 through a network 50.

The storage 250 stores program modules that implement the respective functions of the computing device 200. The processor 230 implements each function by executing the respective program module. The processor 230 may read these program modules from the storage 250 into the memory 240 and then execute them.

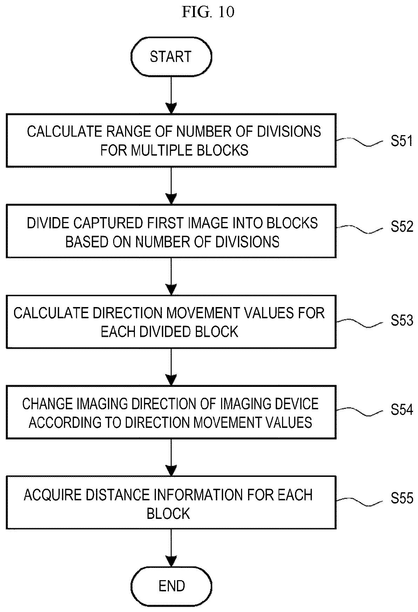

FIG. 10 is a flowchart illustrating a distance information generation method performed by the distance information generation apparatus 100, which includes a processor and a memory that stores program instructions executed by the processor, according to an embodiment of the present invention.

First, the range calculator 110 calculates the range of the number of divisions for dividing the first image 10 captured by the imaging device 107 into a plurality of blocks (S51). The plurality of blocks are M×M blocks obtained by dividing the first image 10 in both the horizontal and vertical directions, where M is a natural number.

The block divider 120 divides the first image 10 into blocks according to the number of divisions (S52). The lower limit of the range of the number of divisions is a value that enables the imaging device 107 to secure the minimum distance resolution, and the upper limit of the range of the number of divisions is a value that ensures the processing time required for the distance information retriever 150 to acquire the distance information for each block is below the threshold.

The movement value calculator 140 calculates the direction movement values for targeting each block among the divided blocks (S53). The direction movement values are PTZ values for each block.

The imaging device 107 changes the imaging direction according to the calculated direction movement values and captures a second image 20 (S54).

The distance information retriever 150 analyzes the captured second image 20 to acquire the distance information for each block (S55). The distance information may be obtained by estimating the focus position for each block 15 and converting the estimated focus position into distance information using locus data.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A distance information generation apparatus having a processor and a memory that stores program instructions executed by the processor, the distance information generation apparatus comprising:

a block divider dividing a first image captured by an imaging device into a plurality of blocks;

a movement value calculator calculating direction movement values for capturing at least one or more blocks among the plurality of divided blocks as targets; and

a distance information retriever acquiring distance information for the at least one or more blocks by analyzing a second image captured by the imaging device, whose imaging direction has been changed based on the calculated direction movement values.

2. The distance information generation apparatus of claim 1, wherein the distance information for the at least one or more blocks is a representative distance value for the at least one or more blocks based on the direction movement values of the at least one or more blocks among the plurality of divided blocks.

3. The distance information generation apparatus of claim 1, wherein the plurality of blocks are M×M blocks obtained by dividing the first image in horizontal and vertical directions, where M is a natural number.

4. The distance information generation apparatus of claim 3, wherein

the direction movement values are PTZ values for the at least one or more blocks, and
the second image is a zoomed-in image having the same size as the first image.

5. The distance information generation apparatus of claim **1,** further comprising:
a controller providing distance information for a block corresponding to a region of interest to a user via a user interface when the user designates a specific position in the first image as the region of interest.

6. The distance information generation apparatus of claim 1, further comprising:

a user interface enabling the user to designate a specific position in the first image as a region of interest; and
a controller acquiring distance information for the region of interest based on distance information for a block corresponding to the region of interest, and causing the imaging device to capture an image based on a focus distance calculated from the acquired distance information.

7. The distance information generation apparatus of claim 6, wherein when the region of interest spans two or more blocks, the distance information for the region of interest is obtained by summing distance information for each of the two or more blocks multiplied by an area ratio of an overlapping portion between the region of interest and each of the two or more blocks.

8. The distance information generation apparatus of claim 6, wherein when continuous auto-focusing is required for the region of interest, the distance information for the region of interest at a specific moment is obtained by summing the distance information for each of the two or more blocks multiplied by an area ratio of an overlapping portion between the region of interest and each of the two or more blocks when the region of interest is moving to span two or more blocks at the specific moment.

9. The distance information generation apparatus of claim 1, further comprising:
a block scanner determining a scan order of the plurality of divided blocks.

10. The distance information generation apparatus of claim 1, further comprising:
a range calculator calculating a range of a number of divisions for the plurality of blocks.

11. The distance information generation apparatus of claim 10, wherein a lower limit of the range of the number of divisions is a value that enables the imaging device to secure a minimum distance resolution.

12. The distance information generation apparatus of claim 11, wherein an upper limit of the range of the number of divisions is a value that ensures the processing time required for the distance information retriever to acquire the distance information for all the blocks is below a threshold.

13. The distance information generation apparatus of claim 12, further comprising:
a user interface receiving a trigger command from the user to divide the first image into the plurality of blocks.

14. The distance information generation apparatus of claim 13, wherein if there is no value that satisfies both the lower and upper limits of the range of the number of divisions, the imaging device captures a zoomed-in image from the first image, and the block divider divides the captured zoomed-in image into the plurality of blocks.

15. A distance information generation apparatus having a processor and a memory that stores program instructions executed by the processor, the distance information generation apparatus comprising:

a block divider dividing a first image captured by an imaging device into a plurality of blocks;
a movement value calculator calculating direction movement values for capturing at least one or more blocks among the plurality of divided blocks as targets; and
a distance information retriever mounted on the imaging device and acquiring absolute distance information for the at least one or more blocks, wherein an imaging direction of the imaging device is changed based on the calculated direction movement values.

16. The distance information generation apparatus of claim 14, wherein the distance information retriever is a Lidar distance meter or a laser distance meter.

17. A distance information generation method performed by an apparatus having a processor and a memory that stores program instructions executed by the processor, the distance information generation method comprising:

dividing a first image captured by an imaging device into a plurality of blocks;
calculating direction movement values for capturing at least one or more blocks among the plurality of divided blocks as targets; and
acquiring distance information for the at least one or more blocks by analyzing a second image captured by the imaging device, whose imaging direction has been changed based on the calculated direction movement values.

18. The distance information generation method of claim 17, wherein the plurality of blocks are $M \times M$ blocks obtained by dividing the first image in horizontal and vertical directions, where M is a natural number.

19. The distance information generation method of claim 18, wherein the direction movement values are PTZ values for the at least one or more blocks, and
the second image is a zoomed-in image having the same size as the first image.

20. The distance information generation method of claim 17, further comprising:

calculating a range of a number of divisions for the plurality of blocks;
wherein
a lower limit of the range of the number of divisions is a value that enables the imaging device to secure a minimum distance resolution, and
an upper limit of the range of the number of divisions is a value that ensures the processing time required for the distance information retriever to acquire the distance information for all the blocks is below a threshold.

FIG. 1

DISTANCE INFORMATION GENERATION APPARATUS (100)

OBJECT ──→ IMAGING DEVICE (107)

DIRECTION CONTROLLER (109)

CONTROLLER (101)

RANGE CALCULATOR (110)

BLOCK DIVIDER (120)

BLOCK SCANNER (130)

USER ←──→ USER INTERFACE (160)

STORAGE (105)

MOVEMENT VALUE CALCULATOR (140)

DISTANCE INFORMATION RETRIEVER (150)

EP 4 521 767 A1

13

FIG. 2

√N BLOCKS
(M BLOCKS)

10

√N BLOCKS
(M BLOCKS)

FIG. 3

10

20

√N

√N

15

$\frac{V}{\sqrt{N}}$

$\frac{H}{\sqrt{N}}$

FIG. 4

FIG. 5

FIG. 6

FIG. 7

FIG. 8

FIG. 9

FIG. 10

```
                    ┌─────────┐
                    │  START  │
                    └────┬────┘
                         │
                         ▼
        ┌──────────────────────────────────────┐
        │ CALCULATE RANGE OF NUMBER OF DIVISIONS│ ⌒  S51
        │        FOR MULTIPLE BLOCKS            │
        └──────────────────┬───────────────────┘
                           │
                           ▼
        ┌──────────────────────────────────────┐
        │ DIVIDE CAPTURED FIRST IMAGE INTO BLOCKS│ ⌒  S52
        │      BASED ON NUMBER OF DIVISIONS     │
        └──────────────────┬───────────────────┘
                           │
                           ▼
        ┌──────────────────────────────────────┐
        │ CALCULATE DIRECTION MOVEMENT VALUES FOR│ ⌒  S53
        │         EACH DIVIDED BLOCK            │
        └──────────────────┬───────────────────┘
                           │
                           ▼
        ┌──────────────────────────────────────┐
        │ CHANGE IMAGING DIRECTION OF IMAGING DEVICE│ ⌒  S54
        │ ACCORDING TO DIRECTION MOVEMENT VALUES│
        └──────────────────┬───────────────────┘
                           │
                           ▼
        ┌──────────────────────────────────────┐
        │ ACQUIRE DISTANCE INFORMATION FOR EACH │ ⌒  S55
        │              BLOCK                    │
        └──────────────────┬───────────────────┘
                           │
                           ▼
                    ┌─────────┐
                    │   END   │
                    └─────────┘
```

| INTERNATIONAL SEARCH REPORT | International application No. |
|---|---|
| | **PCT/KR2023/005963** |

| A. | CLASSIFICATION OF SUBJECT MATTER |
|---|---|

**H04N 23/959**(2023.01)i; **H04N 23/67**(2023.01)i; **H04N 5/77**(2006.01)i; **G03B 13/20**(2006.01)i; **G03B 13/36**(2006.01)i

According to International Patent Classification (IPC) or to both national classification and IPC

| B. | FIELDS SEARCHED |
|---|---|

Minimum documentation searched (classification system followed by classification symbols)

H04N 23/959(2023.01); G01S 17/08(2006.01); G03B 13/18(2006.01); G03B 13/20(2006.01); G06T 7/55(2017.01); H04N 5/232(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 거리 정보(distance information), 블록 분할(block partitioning), 방향 이동값(direction movement value), 제2 영상(second image), 분석(analysis)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br><br>A | KR 10-1396347 B1 (SAMSUNG ELECTRONICS CO., LTD.) 19 May 2014 (2014-05-19)<br>See paragraphs [0003], [0053], [0065], [0068], [0073] and [0084]-[0086]; and figures 3-5. | 1-3,5-6,15,17-18<br><br>4,7-14,16,19-20 |
| Y | KR 10-2278536 B1 (REPUBLIC OF KOREA (NATIONAL FORENSIC SERVICE DIRECTOR MINISTRY OF INTERIOR AND SAFETY)) 19 July 2021 (2021-07-19)<br>See paragraphs [0116]-[0117]; claim 8; and figure 10. | 1-3,5-6,17-18 |
| Y | KR 10-2018-0073460 A (AXIS AB) 02 July 2018 (2018-07-02)<br>See paragraph [0046]; and figure 1. | 15 |
| A | KR 10-2012-0125804 A (LG INNOTEK CO., LTD.) 19 November 2012 (2012-11-19)<br>See paragraphs [0024]-[0036]; and figures 2-4. | 1-20 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 July 2023** | **26 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/005963** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2015-0009393 A1 (FUJIFILM CORPORATION) 08 January 2015 (2015-01-08)<br>    See claims 1-2. | 1-20 |

Form PCT/ISA/210 (second sheet) (July 2022)

## INTERNATIONAL SEARCH REPORT
### Information on patent family members

International application No.

**PCT/KR2023/005963**

| Patent document cited in search report | | | Publication date (day/month/year) | Patent family member(s) | | | Publication date (day/month/year) |
|---|---|---|---|---|---|---|---|
| KR | 10-1396347 | B1 | 19 May 2014 | KR 10-2009-0056592 | | A | 03 June 2009 |
| KR | 10-2278536 | B1 | 19 July 2021 | None | | | |
| KR | 10-2018-0073460 | A | 02 July 2018 | CN | 108234861 | A | 29 June 2018 |
| | | | | CN | 108234861 | B | 14 June 2019 |
| | | | | EP | 3340603 | A1 | 27 June 2018 |
| | | | | EP | 3340603 | B1 | 19 December 2018 |
| | | | | JP | 2018-138988 | A | 06 September 2018 |
| | | | | JP | 6535378 | B2 | 26 June 2019 |
| | | | | TW | 201841492 | A | 16 November 2018 |
| | | | | TW | I704808 | B | 11 September 2020 |
| | | | | US | 10247909 | B2 | 02 April 2019 |
| | | | | US | 2018-0180841 | A1 | 28 June 2018 |
| KR | 10-2012-0125804 | A | 19 November 2012 | None | | | |
| US | 2015-0009393 | A1 | 08 January 2015 | CN | 104221362 | A | 17 December 2014 |
| | | | | CN | 104221362 | B | 12 September 2017 |
| | | | | JP | 2015-143871 | A | 06 August 2015 |
| | | | | JP | 5716130 | B2 | 13 May 2015 |
| | | | | JP | 6031545 | B2 | 24 November 2016 |
| | | | | US | 9264612 | B2 | 16 February 2016 |
| | | | | WO | 2013-145907 | A1 | 03 October 2013 |

Form PCT/ISA/210 (patent family annex) (July 2022)